# EUROPÄISCHE PATENTANMELDUNG

(11) **EP 1 528 046 A2**
(43) Veröffentlichungstag der Anmeldung: **04.05.2005**
(21) Anmeldenummer: 04077942.3
(22) Anmeldetag: 25.10.2004
(51) Int. Cl.: C04B 26/02, C04B 22/04

(54) **Zusatzstoff zur Verbesserung der bioenergestischen Eigenschaften von organisch gebundenen Baustoffen**

(30) Priorität: 27.10.2003 CH 18352003
(71) Anmelder: Labor Grieder, 4497 Rünenberg (CH)
(72) Erfinder: Grieder, Karl, 4497 Rünenberg (CH)
(74) Vertreter: D'haemer, Jan Constant

(57) **Zusammenfassung**

Die Erfindung betrifft einen Zusatzstoff, welcher zusammen mit einem Trägermaterial wie Holzkohle oder Quarzsand, die bioenergetischen Eigenschaften von anorganischen oder organischen Stoffen verbessert. Der beschriebene Zusatzstoff kann für alle organisch gebundenen Baustoffe eingesetzt werden und enthält ein oder mehrere Metalle in pulverisierter Form, sowie ein Trägermaterial. Vorzugsweise enthält der Zusatzstoff die Metalle Eisen, Zink, Kupfer, Blei, Zinn, Antimon, Silber und Gold in unterschiedlichen Mengen sowie Holzkohle als Trägermaterial. Damit der Zusatzstoff die beschriebene bioenergetische Wirkung entfaltet, müssen die Metalle in ihrer elementaren Form vorliegen, d.h. nicht als Oxide, Legierungen, Komplexe oder andere metallorganische Verbindungen. Der beschriebene Zusatzstoff verbessert insbesondere die bioenergetischen Eigenschaften von organisch gebundenen Putzen (Abrieben) und von organisch gebundenen Anstrichmittel.

## Beschreibung

Die Erfindung betrifft einen Zusatzstoff zu anorganischen oder organischen Stoffen, welcher deren **bioenergetischen** Eigenschaften verbessert, und vorzugsweise zusammer, mit einem Trägermaterial eingesetzt wird.

Die Erfindung betrifft insbesondere den Einsatz dieses **Zusatzstoffes** in organisch gebundene Baustoffe, wie Putze (Abriebe) und Anstrichmittel zur Verbesserung ihrer bioenergetischen Eigenschaften.

Es handelt sich bei dem erfindungsgemässen Zusatzstoff um Kupfer oder eine Mischung von Metallen aus der Gruppe Eisen, Zink, Kupfer, Blei, Zinn, Antimon, Quecksilber, Silber und Gold, fein pulverisiert und homogenisiert, vorzugsweise mit Partikelgrössen von <1 mm, auf einem geeigneten Trägermaterial, beispielsweise Holzkohle oder einem mineralischen Baustoff wie Quarzsand mit Partikelgrössen von <1 mm. Die Metalle liegen in ihrer elementaren Form vor, d.h. nicht als Oxide, Legierungen, Komplexe oder andere metallorganische Verbindungen.

Ein bevorzugter Zusatzstoff enthält die Metalle in Anleiten von je 0,1 g bis 20 kg pro 100 kg Zusatzstoff, wobei die Metalle bevorzugt alle in unterschiedlichen Mengen enthalten sind und die Ergänzung zu 100% durch das Trägermaterial erfolgt.

Mit dem erfindungsgemässen Zusatzstoff können die bioenergetischen Eigenschaften von organisch gebundenen Baustoffen wie z.B. synthetischen Putzen (Abriebe) und Anstrichmitteln (Dispersionsfarben) verbessert werden.

Diese Produkte enthalten als wesentliche Bestandteile organisch-synthetische Bindersysteme wie Acrylate, Siliconharze oder Acrylcopolymere; Acrylterpolymere oder organischnatürliche Bindersysteme wie Kasein- oder Chitosan-Binder sowie Fest-stoffkomponenten, wie anorganische oder organische Pigmente, anorganische oder organische Füllstoffe sowie Konservierungsmittel, Hilfsmittel und Wasser.

Der Zusatzstoff wird den Putzen und Anstrichmitteln in Konzentrationen von 0.01 -- 20 Gewichtsprozent, bezogen auf die Gesamtmischung, zugesetzt und homogen verteilt.

Zur Untersuchung der bioenergetischen Wirkung des beschriebenen Zusatzstoffes auf organisch gebundene Baustoffe können generell biosensible Testmethoden, wie beispielsweise Elektroakupunktur (EAV) oder Bioresonanz-Messungen eingesetzt werden.

Diese Testmethoden sind in der Literatur (z.B. J. Begher, Einführung in die Elektroakupunktur nach Voll, Medizinisch-literarische Verlagsgeseilschaft Uelzen, 1994 ISBN 3-88136-162-6 oder Reinhold D. Will, Bioresonanz-Therapie, Jopp Verlag, 2003 ISBN 3-0350-5031-7 / 15. Auflage) beschrieben und in der entsprechenden Fachwelt als aussagekräftige Kriterien anerkannt.

Bei der Bioresonanz-Methode (BICOM Bioresonanz-Therapie) wird in einem physikalischen Resonanz- und Messgerät eine elektromagnetische Schwingung im Frequenz-Bereich des menschlichen Organismus erzeugt. Die Versuchsperson wird über eine Elektrode mit dem Resonanzgerät verbunden. Mit Hilfe einer sogenannten Wabe für Medikamententestung - in welche der zu untersuchende Baustoff eingeführt wird - kann direkt gemessen werden, in welchem Frequenzbereich zwischen der Versuchsperson und dem Baustoff eine Resonanz und in welchem Frequenzbereich eine Dissonanz besteht. Die Erfahrung lehrt nun, dass eine länger andauernde Dissonanz mit der Umgebung das Wohlbefinden und die Gesundheit von Mensch und Tier beeinträchtigen kann.

Bei vergleichenden Untersuchungen von Putzen und Dispersionen jeweils mit und ohne den erfindungsgemäss beschriebenen Zusatzstoff kann dessen Einfluss auf Frequenz-Übereinstimmung zwischen Mensch und Baustoff direkt nachgewiesen werden.

Es zeigt sich, dass mit dem erfindungsgemässen Zusatzstoff eine Vergrösserung bzw. Verstärkung des Resonanz-Bereichs zwischen Mensch und Baumaterial erreicht wird, was eine bioenergetische Verbesserung des betreffenden Baustoffs bestätigt.

Es ist bekannt, dass die Verwendung von Holzkohle als Zuschlagsstoff zu mineral schen Baustoffen, deren bautechnisches Verhalten beeinflusst. So können Baustoffe mit verbesserten Wärmedämmeigenschaften oder mit vermindertem spezifischem Gewicht erhalten werden oder die Holzkohle dient als Farbpigment.

Diese bekannten Effekte werden ebenfalls mit der erfindungsgemässen Metallmischung erreicht, wenn Holzkohle als Trägermaterial verwendet wird, wobei zusätzlich eine Verbesserung der bioenergetischen Eigenschaften der Baustoffe erreicht wird.

### Beispiele

### Beispiel 1: Zusatzstoff mit 2 Komponenten

| **Komponente** | **Anteil** | **Bezeichnung** |
|---|---|---|
| B | 50.0 g | Kupfer |
| H | 950.0 g | Holzkohle |
| **Total** | **1000.00 g** | **Zusatzstoff 1** |

Zur Herstellung des Zusatzstoffes wird die Mischung gemahlen und homogenisiert auf eine Partikelgrösse von <0.1 mm.

### Beispiel 2: Zusatzstoff mit 8 Komponenten

| **Komponente** | **Anteil** | **Bezeichnung** |
|---|---|---|
| A | 65.000 g | Zink |
| B | 50.000 g | Kupfer |
| C | 16.000 g | Blei |
| D | 2.500 g | Zinn |
| E | 0.300 g | Antimon |
| F | 0.080 g | Silber |
| G | 0.005g | Gold |
| H | 856.115 g | Holzkohle |
| **Total** | **1000.000 g** | **Zusatzstoff 2** |

Zur Herstellung des Zusatzstoffs wird die Mischung gemahlen und homogenisiert auf eine Partikelgrösse von <0.1 mm.

### Beispiel 3: Zusatzstoff mit 8 Komponenten

| **Komponente** | **Anteil** | **Bezeichnung** |
|---|---|---|
| A | 195.000 g | Zink |
| B | 150.000 g | Kupfer |
| C | 48.000 g | Blei |
| D | 7.500g | Zinn |
| E | 0.900 g | Antimon |
| F | 0.240 g | Silber |
| G | 0.015 g | Gold |
| I | 598.345 g | Quarzsand (Si O₂) |
| **Total** | **1000.000 g** | **Zusatzstoff 3** |

Zur Herstellung des Zusatzstoffs wird die Mischung gemahlen und homogenisiert auf eine Partikelgrösse von <0.1 mm.

### Beispiel 4: Herstellung der Putz- und Farbträger

### a) Gips

900 g Weissputz (z.B. mineralischef Gipspütz mit Zusätzen) werden in ca. 750 ml sauberes Leitungswasser eingestreut und mit dem Quirl während ca. 1 Minute angerührt. Mit dem Gips werden Polyäthylen-Dosen (Durchmesser 35 mm, Höhe 60 mm) gefüllt, und diese trocknen gelassen. Nach dem Trocknen werden die Polyäthylen-Hüllen entfernt. Auf diese Träger werden die zu testenden Putze und Anstrichmittel aufgebracht.

### b) Beton

3 kg Fertigbeton (z.B. Fertigbeton PC 375, B35/25, Körnung 0 -16 mm) werden in ca. 300 ml sauberes Leitungswasser eingestreut und mit dem Quirl während ca. 3 Minuten angerührt. Mit dem Beton werden Polyäthylen-Dosen (Durchmesser 35 mm, Höhe 60 mm) gefüllt, auf einem Tischvibrator vibriert bis keine Luftblasen mehr aufsteigen und trocknen gelassen. Nach dem Trocknen werden die Polyäthylen-Hüllen entfernt.
Auf diese Träger werden die zu testenden Putze und Anstrichmittel aufgebracht.

### Beispiel 5: Anstrichmittel mit organisch-natürlichem Bindersystem auf Gips

Auf den Gips-Farbträger nach Beispiel 4a werden die untenstehenden Dispersionsfarben aufgebracht und diese Prüfkörper nach dem Trocknen getestet.

| **Komponente** | **a) konventionell** | **b) erfindungsgemäss** |
|---|---|---|
| Handelsübliche Kalkkasein-Wandfarbe weiss BAGT-Nr. 93081 | 1000 g | 998 g |
| Zusammensetzung: Kalkspat, Kreide, Kaolin, Titandioxid, Milch-Kasein, Weisskalkhydrat, Borate, Soda, Methylcellulose, angerührt mit Wasser | | |
| | | |
| Zusatzstoff 1 gemäss Beispiel 1 | | 2 g |
| **Total** | **1000 g** | **1000 g** |

### Beispiel 6: Anstrichmittel mit organisch-synthetischem Bindersystem auf Gips

Auf den Gips-Farbträger nach Beispiel 4a werden die untenstehenden Dispersionsfarben aufgebracht und diese Prüfkörper nach dem Trocknen getestet.

| **Komponente** | **a) konventionell** | **b) erfindungsgemäss** |
|---|---|---|
| Handelsübliche wasserverdünnbare Innenwandfarbe weiss nach DIN 13300, BAGT-Nr. 44324 | 1000 g | 998 g |
| Zusammensetzung: Styrolacrylatdispersion, Titandioxid, Kieselgur, Calciumcarbonat, Glimmer, Kaolin, Wasser, Glykole, Testbenzine, Dicarbonsäureester, Additive, Konservierungsmittel | | |
| | | |
| Zusatzstoff 2 gemäss Beispiel 2 | | 2 g |
| **Total** | **1000 g** | **1000 g** |

### Beispiel 7: Putz mit organisch-synthetischem Bindersystem auf Beton

Auf den Beton-Putzträger nach Beispiel 4b werden die untenstehenden Aufziehputze aufgebracht und diese Prüfkörper nach dem Trocknen getestet:

| **Komponente** | **a) konventionell** | **b) erfindungsgemäss** |
|---|---|---|
| Handelsüblicher, wasserverdünnbarer Aufziehputz weiss, Innenbereich, Körnung 1.0 mm BAG-Nr. 76347 | 1000 g | 998 g |
| Zusammensetzung: Terpolymerdispersion, mineralische Füllstoffe, Titandioxid, Konservierungsmittel, Wasser | | |
| | | |
| Zusatzstoff 2 gemäss Beispiel 2 | | 2g |
| **Total** | **1000 g** | **1000 g** |

### Beispiel 8: Anstrichmittel mit organisch-synthetischem Bindersystem auf Beton

Auf den Beton-Farbträger nach Beispiel 4b werden die untenstehenden Dispersionsfarben aufgebracht und diese Prüfkörper nach dem Trocknen getestet.

| **Komponente** | **a) konventionell** | **b) erfindungsgemäss** |
|---|---|---|
| Handelsübliche wasserverdünnbare Innenwandfarbe weiss nach DIN 13300, BAGT-Nr. 44324 | 1000 g | 980 g |
| Zusammensetzung: Styrolacrylatdispersion, Titandioxid, Kieselgur, Calciumcarbonat, Glimmer, Kaolin, Wasser, Glykole, Testbenzine, Dicarbonsäureester, Additive, Konservierungsmittel | | |
| | | |
| Zusatzstoff 3 gemäss Beispiel 3 | | 20 g |
| **Total** | **1000 g** | **1000 g** |

### Bioenergetische Prüfungen

### Methode

Die bioenergetische Prüfung erfolgt mit der Bioresonanz-Methode (BICOM Bioresonanz-Therapie) unter Anwendung des Medikamententesters (Wabe). Die Beherrschung der Methode muss vorausgesetzt werden (siehe beispielsweise Reinhold D. Will, Bioresonanz-Therapie, Jopp Verlag, 2003 ISBN 3-0350-5031-7 / 15. Auflage).

Bei der Bioresonanz-Methode (BICOM Bioresonanz-Therapie) wird in einem physikalischen Resonanz- und Messgerät eine elektromagnetische Schwingung im Frequenz-Bereich des menschlichen Organismus erzeugt (10 Hz 150 kHz). Die Versuchsperson wird über einer Elektrode und Biotensor mit dem Resonanzgerät verbunden. Mit Hilfe einer sogenannten Wabe für Medikamententestung - in welche der zu untersuchende Baustoff eingeführt wird - kann direkt gemessen werden, in welchem Frequenzbereich zwischen der Versuchsperson und dem Baustoff eine Resonanz und in welchem Frequenzbereich eine Dissonanz besteht; oder bei gleichzeitiger Messung aller Frequenzen, bei welcher Verstärkung/Abschwächung Resonanz und bei welcher Verstärkung/Abschwächung Dissonanzen auftreten.

Die Messung gibt direkt Auskunft, ob der getestete Baustoff auf die Testperson eine harmonisierende Wirkung (Resonanz), eine disharmonisierende Wirkung (Dissonanz) ausübt oder ob der Einfluss allenfalls sowohl harmonisierende wie auch disharmonisierende Bereiche umfasst.

Die Erfahrung lehrt nun, dass eine länger andauernde Dissonanz mit der Umgebung einen negativen Einfluss auf Wohlbefinden und Gesundheit bewirkt, während eine Verbesserung des Resonanz-Bereichs zwischen Mensch und Baumaterial die Voraussetzungen zu Wohlbefinden und Gesundheit verbessert.

### Versuchsanordnung

Gerät: BICOM 2000 (Brügemann GmbH, D-82166 Gräfeling), Medikamententest, Bandpass-Einstellung: Programm A (alle Frequenzen), Bandpass-Durchlaufzeit: 3 Sekunden, Verstärkung: 1.05 bis 64-fach, Abschwächung: 1.0 bis 0.025-fach. Becherelektrode (mit Deckel) zur Aufnahme der Prüfkörper.

### Ergebnisse

**Tabelle 1:**

| Typische Prüfungs-Ergebnisse mit Bioresonanz-Messungen | | | | | |
|---|---|---|---|---|---|
| Beispiel Nr. | Prüfkörper | Wechselwirkung mit Testperson, ♂ 58 Jahre | | | |
| | | a) Prüfkörper konventionell | | b) Prüfkörper erfindungsgemäss | |
| | | Dissonanz | Resonanz | Dissonanz | Resonanz |
| 5 | Kalkkaseindispersions-Farbe auf Gips Zusatzstoff Beispiel 1 | 0.025-12 | 30-64 | | 0.025-64 |
| 6 | Styrolacrylatdispersions-Farbe auf Gips Zusatzstoff Beispiel 2 | 0.2-64 | | | 0.1 -64 |
| 7 | Terpolymerdispersions-Putz auf Beton Zusatzstoff Beispiel 3 | 0.025 - 64 | | | 12-64 |
| 8 | Styrolacrylatdispersions-Farbe auf Beton Zusatzstoff Beispiel 4 | 0.025-7 12 - 64 | 7-12 | | 0.05 - 64 |

Die in Tabelle 1 dargestellten Ergebnisse zeigen bei allen untersuchten Prüfkörpern (erfindungsgemäss) eine Vergrösserung bzw. Verstärkung des Resonanzbereiches durch den erfindungsgemäss beschriebenen Zusatzstoff.

## Patentansprüche

1. Zusatzstoff für organisch gebundene Baustoffe, **dadurch gekennzeichnet, dass** er Kupfer in elementarer und pulverisierter Form oder eine Mischung von Kupfer mit einem oder mehreren Metallen aus der Gruppe Eisen, Zink, Blei, Zinn, Antimon, Quecksilber, Silber und Goid in elementarer und pulverisierter Form und ein Trägermaterial enthält, wobei die Metalle eine echte, nichtlegierte Mischung bilden und der Mengenanteil der Kupferkomponente in der Gesamtmischung weniger als 20 Gewichtsprozent beträgt.

2. Zusatzstoff gemäss Anspruch 1, **dadurch gekennzeichnet, dass** er die Metalle Eisen, Zink, Kupfer, Blei, Zinn, Antimon, Silber und Gold in unterschiedlichen Mengen enthält.

3. Zusatzstoff gemäss Anspruch 1 oder 2, **dadurch gekennzeichnet, dass** die Metalle eine Partikelgrösse von <1 mm aufweisen.

4. Zusatzstoff gemäss einem der Ansprüche 1 bis 3, **dadurch gekennzeichnet, dass** er Holzkohle als Trägermaterial enthält.

5. Zusatzstoff gemäss einem der Ansprüche 1 bis 3, **dadurch gekennzeichnet, dass** er einen mineralischen Baustoff wie Quarzsand als Trägermaterial enthält.

6. Zusatzstoff gemäss einem der Ansprüche 1 bis 5, **dadurch gekennzeichnet, dass** er Kupfer und die anderen Metalle in Anteilen von je 0,1 g bis 20 kg pro 100 kg Zusatzstoff enthält, wobei der Gesamtanteil der Metalle weniger als 50 Gewichtsprozent beträgt und die Ergänzung zu 100 Gewichtsprozent durch das Trägermaterial erfolgt.

7. Verwendung des Zusatzstoffes gemäss einem der Ansprüche 1-6 zur Verbesserung der bioenergetischen Wirkung von organisch gebundenen Baustoffen.

8. Verwendung gemäss Anspruch 7 zur Verbesserung der bioenergetischen Wirkung von handelsüblichen Putzen (Abriebe) und Anstrichmittel wie Dispersionsfarben mit organischsynthetischen Bindersystemen wie Acrylate, Siliconharze oder Acrylcopolymere, Acrylterpolymere oder mit organisch-natürlichen Bindersystemen wie Kasein- oder Chitosan-Bindern.

9. Verwendung gemäss der Ansprüche 7 und 8, **dadurch, gekennzeichnet, dass** der Zusatzstoff in Mengen von 0,01 bis 20 Gewichtsprozent, bezogen auf die Gesamtmischung eingesetzt wird.

10. Putze (Abriebe) bzw. Anstrichmittel wie Dispersionsfarben mit verbesserter bioenergetischen Wirkung, **dadurch gekennzeichnet, dass** sie einen Zusatzstoff gemäss einem der Ansprüche 1-6 enthalten.
